# EUROPEAN PATENT APPLICATION

(11) **EP 4 678 485 A1**
(43) Date of publication of application: **14.01.2026**
(21) Application number: 24187848.7
(22) Date of filing: 10.07.2024
(51) Int. Cl.: B60R 21/38

(54) **HINGE ASSEMBLY FOR A VEHICLE FRONT LID, METHOD FOR OPERATING A HINGE ASSEMBLY, USE OF A SPRING ASSEMBLY, AND VEHICLE**

(71) Applicant: Volvo Car Corporation, 405 31 Göteborg (SE)
(72) Inventor: OLPAK, Tolga, 40531 Göteborg (SE); BÖRJESSON, Björn, 40531 Göteborg (SE); WIJK, Anders, 40531 Göteborg (SE)
(74) Representative: Maiwald GmbH

(57) **Abstract**

The disclosure relates to a hinge assembly (16) for movably coupling a vehicle front lid to a vehicle body structure. The hinge assembly (16) comprises a first mechanical connection interface (26), a second mechanical connection interface (28), a pedestrian protection mechanism (30), and a locking mechanism (44). The first mechanical connection interface (26) is for mounting the hinge assembly (16) to the vehicle front lid. The second mechanical connection interface (28) is for mounting the hinge assembly (16) to the vehicle body structure. The pedestrian protection mechanism (30) is for selectively lifting the first mechanical connection interface (26) relative to the second mechanical connection interface (28). The locking mechanism (44) is for selectively locking the pedestrian protection mechanism (30) such that in a locking state of the locking mechanism (44) the pedestrian protection mechanism (30) is disabled and in a release state (48) of the locking mechanism (44) the pedestrian protection mechanism (30) is enabled. Additionally, a method for operating a hinge assembly (16) is described. Furthermore, a use of a spring assembly (50) for selectively actuating a locking mechanism (44) for a pedestrian protection mechanism (30) in a vehicle shown. Also, a vehicle is described.

## Description

### TECHNICAL FIELD

The present disclosure relates to a hinge assembly for movably coupling a vehicle front lid to a vehicle body structure.

Moreover, the present disclosure is directed to a method for operating a hinge assembly.

Additionally, the present disclosure relates to a use of a spring assembly.

Furthermore, the present disclosure is directed to a vehicle.

### BACKGROUND ART

Vehicles usually include a plurality of safety systems to reduce the injury risk of both passengers in the vehicle and other traffic participants involved in an accident with the vehicle, e.g. pedestrians or cyclists. An example of a safety system for reducing the injury risk of passengers in the vehicle is an airbag system. An example of a safety system for reducing the injury risk of other traffic participants involved in an accident with the vehicle is a so-called pedestrian protection system configured for selectively lifting a front lid of the vehicle in order to reduce an impact on a pedestrian colliding with the vehicle. It is noted that even though such systems are called pedestrian protection system, they may as well protect other traffic participants, e.g. cyclists or motor cyclists. When operating a pedestrian protection system configured for selectively lifting the front lid of the vehicle, one has to make sure that a risk of injury resulting from the movement of the front lid and/or from the lifted position of the front lid is appropriate with respect to the impact to be mitigated. In other words, one has to make sure that the operation of the pedestrian protection system reduces an overall risk of injury.

### SUMMARY

It is therefore an objective of the present disclosure to improve pedestrian protection systems configured for selectively lifting a front lid of the vehicle. In particular, appropriateness of a risk of injury resulting from the movement of the front lid and/or from the lifted position of the front lid with respect to the impact to be mitigated shall be enhanced.

The problem is at least partially solved or alleviated by the subject matter of the independent claims of the present disclosure, wherein further examples are incorporated in the dependent claims.

According to a first aspect, there is provided a hinge assembly for movably coupling a vehicle front lid to a vehicle body structure. The hinge assembly comprises a first mechanical connection interface for mounting the hinge assembly to the vehicle front lid. The hinge assembly further comprises a second mechanical connection interface for mounting the hinge assembly to the vehicle body structure. The hinge assembly further comprises a pedestrian protection mechanism for selectively lifting the first mechanical connection interface relative to the second mechanical connection interface. The hinge assembly further comprises a locking mechanism for selectively locking the pedestrian protection mechanism such that in a locking state of the locking mechanism the pedestrian protection mechanism is disabled and in a release state of the locking mechanism the pedestrian protection mechanism is enabled. The pedestrian protection mechanism may be understood as a mechanism configured for lifting the vehicle front lid in case the hinge assembly is coupled to a vehicle front lid. Thereby, an impact of a road user involved in an accident with the vehicle is alleviated. This is particularly relevant in a front crash situation. Road users may be pedestrians, cyclists, or any other road user colliding with the vehicle. This means that if the vehicle travels on a road surface and collides with a road user, the pedestrian protection system may alleviate the impact of the road user on the vehicle by selectively lifting the first mechanical connection interface relative to the second mechanical connection interface. It has been found that lifting the vehicle front lid for the protection of a road user involved in an accident with the vehicle practically does not affect the occupants of the vehicle comprising the vehicle front lid and the pedestrian protection mechanism, if the vehicle travels at a comparatively low speed, e.g. below 60 km/h. However, it has also been found that at comparatively high speeds of the vehicle, lifting the vehicle front lid bears the risk that a portion of the vehicle front lid penetrates a windshield of the vehicle, thereby intruding into the passenger cabin. This increases an injury risk for the occupants of the vehicle. In such situations, the locking mechanism is helpful since the pedestrian protection mechanism may be selectively enabled if the vehicle travels at a comparatively low speed. In contrast thereto, if the vehicle travels at a comparatively high speed, the locking mechanism may assume a locking state and, thus, may disable the pedestrian protection mechanism. This has the effect that the first mechanical connection interface may not be lifted selectively relative to the second mechanical connection interface, meaning the front lid may not be lifted selectively. Therefore, a risk that a portion of the front lid of the vehicle penetrates the windshield and reaches the passenger cabin of the vehicle may be reduced. In other words, the risk of injuring occupants in the vehicle may be reduced. Altogether, the pedestrian protection system is improved.

In an example, the vehicle body structure is a body-in-white. The front lid may be understood as a bonnet covering a front body part of the vehicle. In this context, the front body part may comprise a motor compartment or a storage compartment.

According to an example, the pedestrian protection mechanism comprises a pyro actuator for selectively lifting the first mechanical connection interface relative to the second mechanical connection interface. Thus, in case the hinge assembly is connected to a vehicle front lid, the pyro actuator may lift the front lid.

According to an example, the pedestrian protection mechanism comprises a first part comprising the first mechanical connection interface or connected to the first mechanical connection interface. The pedestrian protection mechanism further comprises a second part pivotably connected to the first part. This has the effect that the second part and the first part may pivot relative to one another. In other words, an angle between the first part and the second part may be adjusted. In an example, the angle between the first part and the second part is comparatively large in case the passenger protection mechanism is activated, i.e. if the hinge assembly is in a state that would lift a vehicle front lid connected thereto. Accordingly, the angle between the first part and the second part may be comparatively small in case the passenger protection mechanism is not activated, i.e. if the hinge assembly is in a state that would not lift the vehicle front lid connected thereto. Thus, the first part and the second part form a reliable pedestrian protection mechanism. Moreover, such a pedestrian protection mechanism is structurally simple and robust.

According to an example, the locking mechanism comprises a locking element configured to enable or disable the pedestrian protection mechanism. The locking element may engage the first part, or more generally speaking a part connected to the first mechanical connection interface, and the second part, or more generally speaking a part connected to the second mechanical connection interface, in order to disable the pedestrian protection mechanism. Thus, the locking mechanism may be in the locking state, when the locking element engages the first part and the second part. More generally speaking, the locking element blocks a movement of the first mechanical connection interface and the second mechanical connection interface relative to one another. This has the effect that the first mechanical connection interface may not be lifted relative to the second mechanical connection interface, meaning the front lid may not be lifted selectively, when the locking element engages the first part and the second part. Similarly, the locking element may be disengaged from at least one of the first part and the second part if the locking mechanism is in the release state. More generally speaking, the locking element may be disengaged from at least one of the part connected to the first mechanical connection interface and the part connected to the second mechanical connection interface. Thus, a relative movement of the first mechanical connection interface and the second mechanical connection interface relative to one another is possible. Such a locking element is structurally simple and robust.

According to an example, the locking element is pin-shaped. This has the effect that the locking element may be designed in a compact manner. Thus, the size of the locking element, and, thus, the size of the overall hinge assembly is comparatively small.

According to an example, the first part or the second part comprises a guiding means. The locking element engages the guiding means such that the locking element may assume a first position relative to the guiding means, the first position associated with the enabled state of the pedestrian protection mechanism, and such that the locking element may assume a second position relative to the guiding means, the second position associated with the disabled state of the pedestrian protection mechanism. The fact that the locking element engages the guiding means has the effect that the locking element may move from the first position to the second position in a predefined and guided manner. This means that the locking element may only be able to move within the guiding means. In other words, the locking element may not be able to move in another position than the first position and the second position. This renders the locking mechanism robust and reliable.

According to an example, the guiding means comprises an obstacle feature to be overcome by the locking element when moving from the first position into the second position. This has the effect that the locking element may not move inadvertently or unintentionally from the first position into the second position. Optionally, the obstacle feature may be designed such that a predefined force is necessary to overcome the obstacle feature, i.e. to move the locking element from the first position into the second position. Altogether, the reliability of the locking mechanism is further improved.

In an example, the obstacle feature comprises at least one protrusion element that extends into the guiding means such that the locking element assumes either the first position or the second position. Such an obstacle feature is structurally simple and reliable in operation.

According to an example, the guiding means comprises an opening having a cross section formed as two partially merged circular areas. Each of the circular areas may substantially correspond or may be slightly larger than an associated cross section of the locking element. In other words, each of the two partially merged circular areas may have the same contour or a similar contour as the locking element. This has the effect that the locking element may be located in the portion of the guiding means having the cross section of a first one of the merged circular areas or in the portion of the guiding means having the cross section of a second one of the merged circular areas. The fact that the two circular areas are only partly merged may lead to at least one protrusion, e.g. two protrusions, extending into the guiding means. This protrusion may form the obstacle feature or may form part of the obstacle feature. Therefore, the locking element may not have a free space or a clearance or a tolerance to freely move between the two portions of the guiding means associated with one of the two partially merged circular areas. Thus, the reliability of the locking mechanism is further improved.

According to an example, the second part or the first part comprises an engagement feature engageable by the locking element if the locking mechanism is in the locking state. As has been mentioned before, the locking state of the locking mechanism is associated with the disabled state of the pedestrian protection mechanism. This means that the locking element may not engage the second part or the first part, if the locking mechanism is in the release state and, thus, the pedestrian protection mechanism is in the enabled state. This has the effect that the locking mechanism may engage the second part or the first part selectively. Therefore, the reliability of the locking mechanism is further improved.

In an example, the engagement feature comprises an oblong hole. The oblong hole may be arranged adjacent to an edge of the second part or the first part such that the oblong hole may be connected to the edge via another oblong hole or a connection channel. The connection to the edge is realized in one portion of the oblong hole forming part of the engagement feature, wherein the oblong hole also comprises a portion which is not connected to the edge. Thus, the locking element may engage the engagement feature if it is located in the portion of the oblong hole which is not connected to the edge. If the locking element is located in the portion of the oblong hole coupled to the edge, the locking element may be able to be moved out of the oblong hole. An oblong hole having a portion which is connected to an adjacent edge may also be described as being L-shaped, wherein one leg of the L-shape forms the connection to the edge. In all of the above-described examples, the long hole may be subdivided into an open portion and a closed portion. The open portion may be connected to the edge of the second part or the first part such that the locking element may be able to move out of the open portion. The closed portion may correspond to a portion of the oblong hole extending in the second part or the first part. In this context, the closed portion may extend parallel to the edge of the second or the first part without a connection to the edge.

According to an example, the locking mechanism comprises a spring assembly configured to lift or open the vehicle front lid. Thus, the spring assembly serves two purposes, as a part of the locking mechanism ant to lift or open the vehicle front lid. This has the effect that if the locking mechanism is in the release state, the front lid may be lifted or opened for maintenance or the front lid may be lifted for alleviating an impact of a road user on the vehicle in case of a front crash situation where relatively low mechanical forces may apply on the front lid. Thus, both the lifting or opening for maintenance as well as the lifting or opening for alleviating the impact of a road user on the vehicle are enabled in a spring-loaded manner. In case the locking mechanism is to be put in the locking state, i.e. in case the pedestrian protection mechanism shall be disabled, this can be done using the spring assembly. This further improves the reliability of the locking mechanism.

According to an example, the spring assembly has a first end connectable to the vehicle body structure and a second end connected to the locking element. Thus, the locking element may be moved using the spring assembly. This is advantageous since during an accident, especially a front collision, a force resulting from the accident may act on the spring assembly. The locking element may require a certain predefined force for moving from a position associated with a release state of the locking mechanism into a position associated with a locking state of the locking mechanism. Thus, the locking mechanism may be operated depending on a force resulting from the accident and acting on the spring assembly. More precisely, in case a relatively high force results from the accident, the locking element may be moved into a position associated with the locking state via the spring assembly. In case a relatively small force results from the accident, the locking element may stay in a position associated with the release state. In this context, a relatively high force may result, if the accident occurs at a relatively high speed and a relatively small force may result, if the accident occurs at a relatively low speed. Thus, the pedestrian protection mechanism may be disabled if an accident occurs at a comparatively high speed and the pedestrian protection mechanism may be enabled if an accident occurs at a comparatively low speed.

According to an example, the spring assembly is a gas strut. Gas struts are frequently used for assisting the opening of a vehicle front lid. Using such a gas strut in a locking mechanism renders the locking mechanism compact, since the gas strut serves two purposes.

According to a second aspect, there is provided a method for operating a hinge assembly according to the first aspect. The method comprises selectively disabling the pedestrian protection mechanism. Selectively disabling the pedestrian protection mechanism may be understood as deactivating or locking the pedestrian protection mechanism, i.e. the pedestrian protection mechanism is not operational. The pedestrian protection mechanism may be understood as a mechanism configured for lifting the vehicle front lid in case the hinge assembly is coupled to a vehicle front lid. Thereby, an impact of a road user involved in an accident with the vehicle is alleviated. This is particularly relevant in a front crash situation. Road users may be pedestrians, cyclists, or any other road user colliding with the vehicle. This means that if the vehicle travels on a road surface and collides with a road user, the pedestrian protection system may alleviate the impact of the road user on the vehicle by selectively lifting the first mechanical connection interface relative to the second mechanical connection interface. It has been found that lifting the vehicle front lid for the protection of a road user involved in an accident with the vehicle practically does not affect the occupants of the vehicle comprising the vehicle front lid and the pedestrian protection mechanism, if the vehicle travels at a comparatively low speed, e.g. below 60 km/h. However, it has also been found that at comparatively high speeds of the vehicle, lifting the vehicle front lid bears the risk that a portion of the vehicle front lid penetrates a windshield of the vehicle, thereby intruding into the passenger cabin. This increases an injury risk for the occupants of the vehicle. In such situations, the selectively disabling the pedestrian protection mechanism is helpful since the pedestrian protection mechanism may only be enabled if the vehicle travels at a comparatively low speed. In contrast thereto, if the vehicle travels at a comparatively high speed, the pedestrian protection mechanism may be disabled. Therefore, a risk that a portion of the front lid of the vehicle penetrates the windshield and reaches the passenger cabin of the vehicle may be reduced. In other words, the risk of injuring occupants in the vehicle may be reduced. Altogether, the pedestrian protection system is improved.

According to an example, the pedestrian protection mechanism is selectively disabled in a crash situation occurring at a speed exceeding a predefined speed threshold. In this context the speed may correspond to a vehicle speed. Thus, the predefined speed threshold may correspond to the threshold of a predefined vehicle speed. As has been mentioned before, high vehicle speeds often result in high mechanical forces occurring in a crash situation. In contrast thereto, low vehicle speeds often result in low mechanical forces occurring in a crash situation. Thus, a risk that the front lid of the vehicle penetrates the windshield of the vehicle and intrudes into a vehicle cabin may be reduced. This mainly happens at comparatively high speeds. In other words, the risk of injuring passengers in the vehicle may be reduced and the pedestrian protection system may be improved. This means that also the vehicle safety is enhanced.

According to a third aspect, there is provided a use of a spring assembly for selectively actuating a locking mechanism for a pedestrian protection mechanism in a vehicle. The spring assembly being used for selectively actuating the locking mechanism may reduce the number of units or parts necessary to move the locking element. In other words, without the spring assembly being used for selectively actuating the locking mechanism, other components would be needed to actuate the movement of the locking element. This has the effect that the vehicle may not necessarily be equipped with additional and/or more complex means for actuating the locking mechanism. Further, such a use of the spring assembly may allow to build more compact vehicles with an increased vehicle safety reducing the risk of injuring passengers in the vehicle with less complex components.

According to a fourth aspect, there is provided a vehicle. The vehicle comprises a hinge assembly according to the first aspect. As has been mentioned before, using such a hinge assembly, a risk that the front lid of the vehicle penetrates a windshield of the vehicle and intrudes into a vehicle cabin may be reduced. In other words, the risk of injuring passengers in the vehicle may be reduced and the pedestrian protection system may be improved. This means that also the vehicle safety is enhanced.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising a hinge assembly according to the present disclosure, wherein the hinge assembly may be operated using a method according to the present disclosure,
- Figure 2: shows a portion of the vehicle of Figure 1, wherein the hinge assembly is represented in more detail, and wherein the front lid is in a first angular position,
- Figure 3: shows the portion of the vehicle as in Figure 2, wherein the front lid is in a second angular position,
- Figure 4: shows the portion of the vehicle as in Figure 2, wherein the front lid is in a third angular position,
- Figure 5: shows a detail V of Figure 4,
- Figure 6: shows the detail of Figure 5 from an opposite perspective,
- Figure 7: shows the hinge assembly in a separate perspective view,
- Figure 8: shows the hinge assembly, wherein a locking element is in a first position,
- Figure 9: shows the hinge assembly of Figure 8, wherein the locking element is in a second position, and
- Figure 10: shows the hinge assembly of Figure 9 in a back view, wherein the locking element is located between the first position and the second position.

### DETAILED DESCRIPTION

The Figures are merely schematic representations and serve only to illustrate examples of the disclosure. Identical or equivalent elements are in principle provided with the same reference signs.

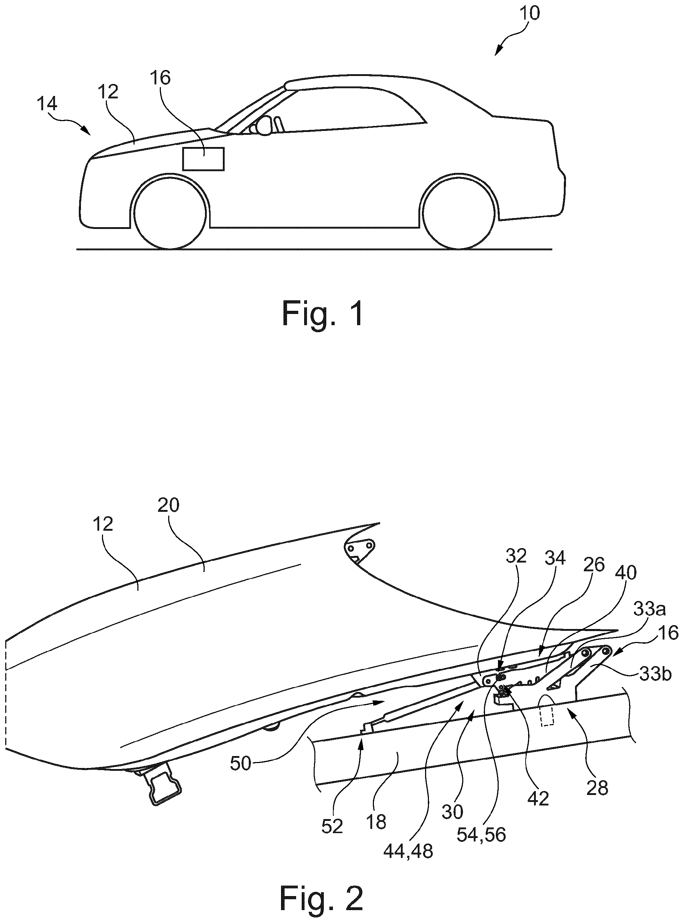

Figure 1 shows a vehicle 10 that comprises a front lid 12. The front lid 12 is to be understood as a bonnet or a hood covering a front body part 14 of the vehicle 10. In the present example, the front body part 14 comprises a motor compartment. In another example, the front body part 14 comprises a front trunk, i.e. a storage compartment.

The vehicle 10 further comprises a hinge assembly 16. The hinge assembly 16 movably couples the front lid 12 to a vehicle body structure 18.

Thus, the front lid 12 can assume a first angular position 20 (see Figure 2). In the present example, the front lid 12 being in the first angular position 20 is to be understood as the front lid 12 being closed. In other words, in the first angular position 20, the front lid 12 covers the front body part 14 of the vehicle 10 in a manner that the front lid 12 smoothly integrates with the remaining portions of the vehicle body.

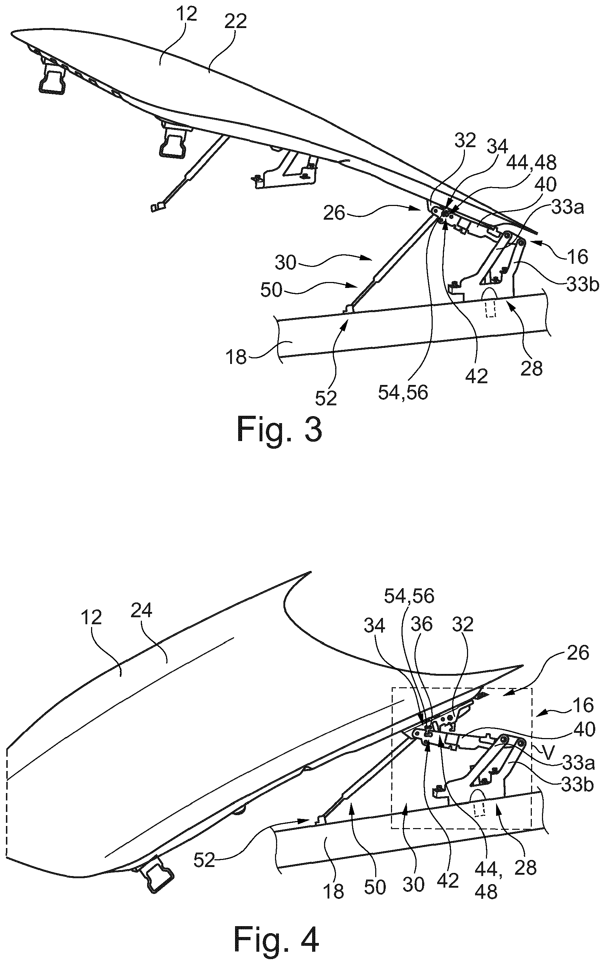

The front lid 12 can further assume a second angular position 22 (see Figure 3). The second angular position 22 is to be understood as the front lid 12 being open, e.g. for maintenance reasons. In other words, in the second angular position 22, the front lid 12 does not cover the front body part 14 of the vehicle 10. Rather, the front lid 12 renders the motor compartment accessible. Yet in other words, the front lid 12 and the front body part 14 form an angle therebetween, wherein the angle is greater, if the front lid 12 is in the second angular position 22 than if the front lid 12 is in the first angular position 20.

The front lid 12 can further assume a third angular position 24 (see Figure 4). The third angular position 24 is to be understood as the front lid 12 being deployed or lifted in a pedestrian protection position. The front lid 12 assumes the third angular position 24, in case the vehicle 10 collides with a road user in a front crash situation. In the third angular position 24, the front lid 12 is lifted for alleviating an impact of the road user on the vehicle 10. It is noted that in the third angular position 24 the rear end of the front lid 12 is lifted with respect to the vehicle body structure 18.

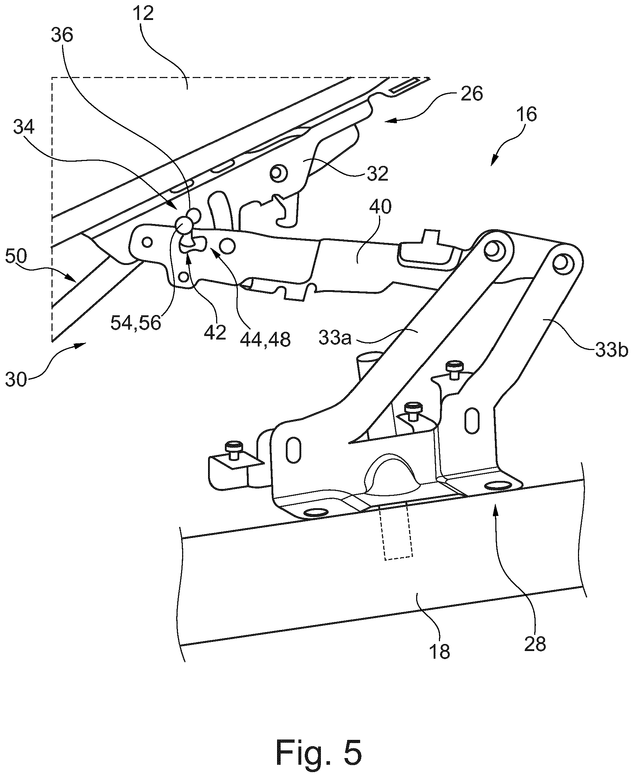

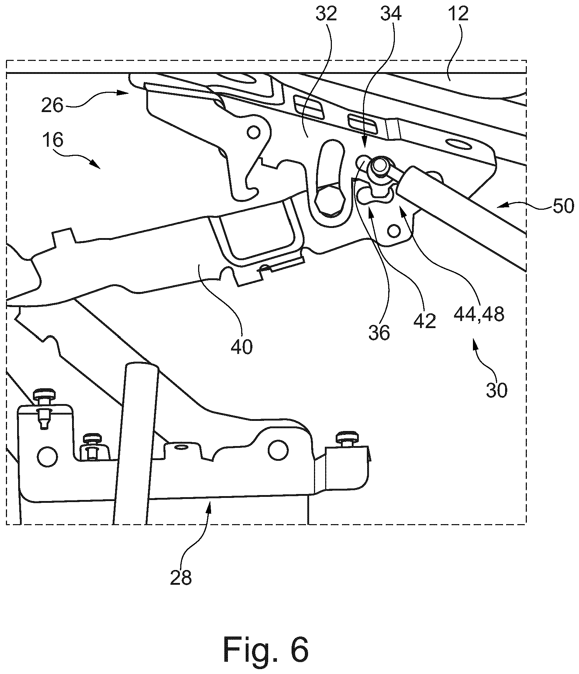

More details of the hinge assembly 16 lifting the front lid 12 into the third angular position 24 are shown in Figures 5 and 6.

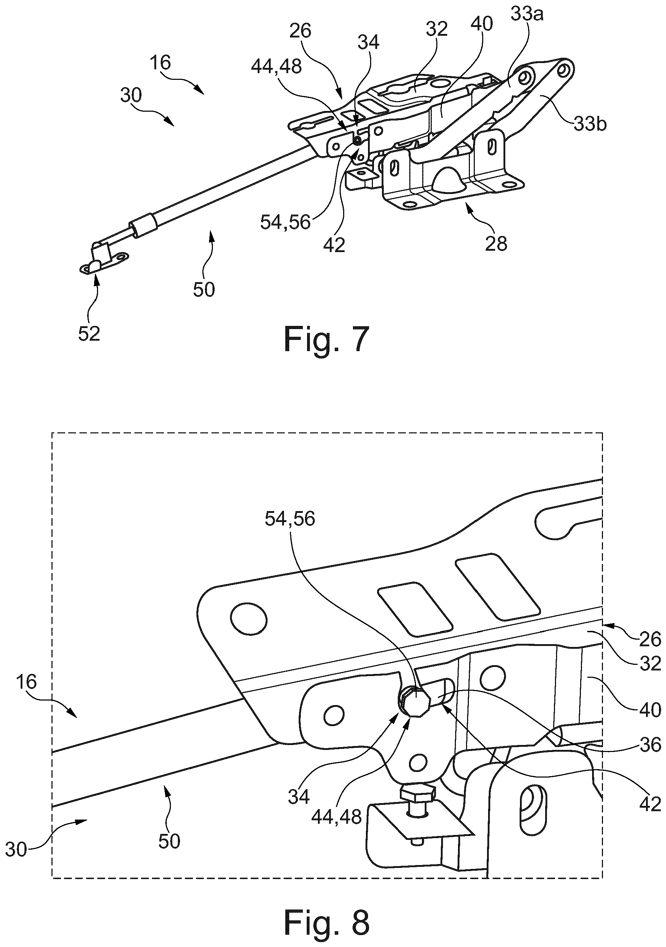

As it is shown in Figure 7, the hinge assembly 16 comprises a first mechanical connection interface 26. The first mechanical connection interface 26 is for mounting the hinge assembly 16 to the front lid 12.

In the example shown in the figures, the first mechanical connection interface 26 is realized by a sheet metal profile having a generally L-shaped cross section.

The hinge assembly 16 further comprises a second mechanical connection interface 28. The second mechanical connection interface 28 is for mounting the hinge assembly 16 to the vehicle body structure 18.

In the example shown in the figures, the second mechanical connection interface 28 is realized by a sheet metal profile having a generally L-shaped cross section.

The hinge assembly 16 further comprises a pedestrian protection mechanism 30. The pedestrian protection mechanism 30 is for selectively lifting the first mechanical connection interface 26 relative to the second mechanical connection interface 28. In other words, the pedestrian protection mechanism 30 is for selectively moving the front lid 12 from the first angular position 20 into the third angular position 24.

The pedestrian protection mechanism 30 comprises a first part 32.

In the present example, the first part 32 is the same part that comprises the first mechanical connection interface 26.

In another example, the first part 32 is connected to the first mechanical connection interface 26.

The pedestrian protection mechanism 30 further comprises a second part 40. The second part 40 is pivotably connected to the first part 32.

In the present example, the second part 40 is generally plate shaped and made from sheet metal.

In order to allow the hinge assembly 16 to move the front lid 12 from the first angular position 20 into the second angular position 22, the part comprising the second mechanical connection interface 28 and the second part 40 are movably coupled via two lever arms 33a, 33b.

Both lever arms 33a, 33b are pivotably connected to the part comprising the second mechanical connection interface 28. Moreover, both lever arms 33a, 33b are pivotably connected to the second part 40.

The hinge assembly 16 also comprises a locking mechanism 44.

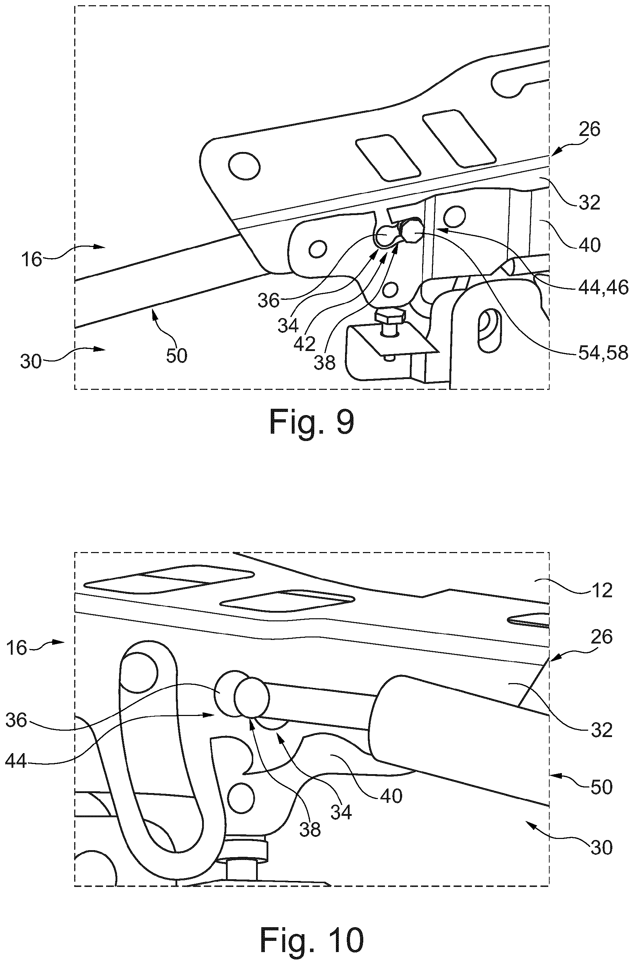

The locking mechanism 44 is for selectively locking the pedestrian protection mechanism 30 such that in a locking state 46 (cf. Figure 9) of the locking mechanism 44 the pedestrian protection mechanism 30 is disabled and in a release state 48 (cf. Figure 8) of the locking mechanism 44 the pedestrian protection mechanism 30 is enabled.

The locking mechanism 30 comprises a guiding mechanism 34 provided on the first part 32.

The guiding means 34 comprises an opening 36 that has a cross section formed as two partially merged circular areas (see also Figures 8 and 9).

The guiding means 34 further comprises an obstacle feature 38.

In the present example, the obstacle feature 38 is formed by the two protrusions resulting from partially merging the circular areas of the cross section of the opening 36. These two protrusions extend towards the interior of the opening 36.

Moreover, the locking mechanism 30 comprises an engagement feature 42 formed on the second part 40.

It is noted that it is also possible that the second part 40 comprises the beforementioned guiding means 34 and the first part 32 comprises the engagement feature 42.

The locking mechanism 44 additionally comprises a spring assembly 50. The spring assembly 50 is configured to lift or open the front lid 12 (see also Figures 3 and 4). In other words, the spring assembly 50 is configured to move the front lid 12 from the first angular position 20 into the second angular position 22.

In the present example, the spring assembly 50 is a gas strut.

The spring assembly 50 has a first end 52 that is connectable to the vehicle body structure 18 (cf. Figure 7).

The locking mechanism 44 further comprises a locking element 54. The locking element 54 is configured to enable or disable the pedestrian protection mechanism 30 (see also Figures 8, 9, and 10).

In the present example, the locking element 54 is pin-shaped.

The second end of the spring assembly 50 is connected to the locking element 54.

Moreover, the locking element 54 engages the guiding means 34. This means that the pin-shaped locking element 54 extends through the opening 36.

Inside the opening 36, the locking element 54 may assume a first position 56 or a second position 58. Each of these positions is associated with one of the partially merged circular cross sections. This means, if the locking element is in a first position 56, it is located in a first portion of the opening 36 having a circular cross section. If the locking element is in a second position 58, it is located in a second portion of the opening having a circular cross section.

The first position 56 is associated with the enabled state of the pedestrian protection mechanism 30.

The second position 58 is associated with the disabled state of the pedestrian protection mechanism 30.

The locking element 54 needs to overcome the obstacle feature 38 when moving from the first position 56 into the second position 58.

The locking element 54 also may engage the engagement feature 42 of the second part 40 if the locking mechanism 44 is in the disabled state.

This means that the pin-shaped locking element 54 extends into the oblong hole forming the engagement feature 42.

In the following, the method for operating the hinge assembly 16 will be explained in more detail.

The method comprises selectively disabling the pedestrian protection mechanism 30.

When executing the method, the hinge assembly 16 and the associated vehicle 10 is assumed to be in an initial state which corresponds to the state as shown in Figure 2, i.e. the front lid 12 is in the first angular position 20 which may also be referred to as the closed position.

In this state, the pedestrian protection mechanism 30 is enabled due to the fact that the locking mechanism 44 is in a release state, i.e. the locking element 54 is in the first position 54 (see for example Figure 8).

In the present example, the pedestrian protection mechanism 30 is selectively disabled since a crash situation occurs. A speed of the vehicle 10 exceeds a predefined speed threshold.

This has the effect that the crash situation leads to comparatively high forces and deformations on the vehicle 10.

These forces and deformations also act on the spring assembly 50, especially on the first end 52 of the spring assembly 50.

Consequently, the spring assembly 50 moves and, thereby, pushes on the locking element 54 such that the locking element 54 moves from the first position 56 into the second position 58. It is understood that the spring assembly 50 needs to push the locking element 54 using a force sufficiently high to make the locking element 54 overcomes the obstacle feature 38.

Thus, the locking element 54 engages the engagement feature 42 of the second part 40. More precisely, the locking element 54 extends through both the opening 36 and the engagement features 42, thereby blocking a relative movement of the first part 32 and the second part 40 relative to one another. In other words, the locking mechanism 44 is in the locking state. Therefore, the locking element 54 disables the pedestrian protection mechanism 30 by assuming the second position 58 relative to the guiding means 34.

In other words, in the present example, the spring assembly 50 is used for selectively actuating the locking mechanism 44 for the pedestrian protection mechanism 30 such that the pedestrian protection mechanism 30 is disabled.

As used herein, the phrase "at least one" in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: front lid
- 14: front body part
- 16: hinge assembly
- 18: vehicle body structure
- 20: first angular position
- 22: second angular position
- 24: third angular position
- 26: first mechanical connection interface
- 28: second mechanical connection interface
- 30: pedestrian protection mechanism
- 32: first part
- 33a: lever arm
- 33b: lever arm
- 34: guiding means
- 36: opening
- 38: obstacle feature
- 40: second part
- 42: engagement feature
- 44: locking mechanism
- 46: locking state
- 48: release state
- 50: spring assembly
- 52: first end
- 54: locking element
- 56: first position
- 58: second position
- S 1: first step

## Claims

1. A hinge assembly (16) for movably coupling a vehicle front lid (12) to a vehicle body structure (18), the hinge assembly (16) comprising:
a first mechanical connection interface (26) for mounting the hinge assembly (16) to the vehicle front lid (12),
a second mechanical connection interface (28) for mounting the hinge assembly (16) to the vehicle body structure (18),
a pedestrian protection mechanism (30) for selectively lifting the first mechanical connection interface (26) relative to the second mechanical connection interface (28),
and
a locking mechanism (44) for selectively locking the pedestrian protection mechanism (30) such that in a locking state (46) of the locking mechanism (44) the pedestrian protection mechanism (30) is disabled and in a release state (48) of the locking mechanism (44) the pedestrian protection mechanism (30) is enabled.

2. The hinge assembly (16) of claim 1, wherein the pedestrian protection mechanism (30) comprises a first part (32) comprising the first mechanical connection interface (26) or connected to the first mechanical connection interface (26), and a second part (40) pivotably connected to the first part (32).

3. The hinge assembly (16) of claim 1 or 2, wherein the locking mechanism (44) comprises a locking element (54) configured to enable or disable the pedestrian protection mechanism (30).

4. The hinge assembly (16) of claim 3, wherein the locking element (54) is pin-shaped.

5. The hinge assembly (16) of claim 2 and any one of claims 3 and 4, wherein the first part (32) or the second part (40) comprises a guiding means (34), wherein the locking element (54) engages the guiding means (34) such that the locking element (54) may assume a first position (56) relative to the guiding means (34), the first position (56) associated with the enabled state of the pedestrian protection mechanism (30), and such that the locking element (54) may assume a second position (58) relative to the guiding means (34), the second position (58) associated with the disabled state of the pedestrian protection mechanism (30).

6. The hinge assembly (16) of claim 5, wherein the guiding means (34) comprises an obstacle feature (38) to be overcome by the locking element (54) when moving from the first position (56) into the second position (58).

7. The hinge assembly (16) of claim 5 or 6, wherein the guiding means (34) comprises an opening (36) having a cross section formed as two partially merged circular areas.

8. The hinge assembly (16) of claim 2 any one of claims 3 to 7, wherein the second part (40) or the first part (32) comprises an engagement feature (42) engageable by the locking element (54) if the locking mechanism (44) is in the locking state.

9. The hinge assembly (16) of any one of the preceding claims, wherein the locking mechanism (44) comprises a spring assembly (50) configured to lift or open the vehicle front lid (12).

10. The hinge assembly (16) of claim 9 and any one of claims 3 to 8, wherein the spring assembly (50) has a first end (52) connectable to the vehicle body structure (18) and a second end connected to the locking element (54).

11. The hinge assembly (16) of claims 9 or 10, wherein the spring assembly (50) is a gas strut.

12. A method for operating a hinge assembly (16) of any one of claims 1 to 11, the method comprising:
selectively disabling the pedestrian protection mechanism (30).

13. The method of claim 12, wherein the pedestrian protection mechanism (30) is selectively disabled in a crash situation occurring at a speed exceeding a predefined speed threshold.

14. A use of a spring assembly (50) for selectively actuating a locking mechanism (44) for a pedestrian protection mechanism (30) in a vehicle (10).

15. A vehicle (10) comprising a hinge assembly (16) of any one of claims 1 to 11.

## Amended claims

### Amended claims in accordance with Rule 137(2) EPC.

1. A hinge assembly (16) for movably coupling a vehicle front lid (12) to a vehicle body structure (18), the hinge assembly (16) comprising:
a first mechanical connection interface (26) for mounting the hinge assembly (16) to the vehicle front lid (12),
a second mechanical connection interface (28) for mounting the hinge assembly (16) to the vehicle body structure (18),
a pedestrian protection mechanism (30) for selectively lifting the first mechanical connection interface (26) relative to the second mechanical connection interface (28), and
a locking mechanism (44) for selectively locking the pedestrian protection mechanism (30) based on a vehicle speed such that in a locking state (46) of the locking mechanism (44) the pedestrian protection mechanism (30) is disabled and in a release state (48) of the locking mechanism (44) the pedestrian protection mechanism (30) is enabled.

2. The hinge assembly (16) of claim 1, wherein the pedestrian protection mechanism (30) comprises a first part (32) comprising the first mechanical connection interface (26) or connected to the first mechanical connection interface (26), and a second part (40) pivotably connected to the first part (32).

3. The hinge assembly (16) of claim 1 or 2, wherein the locking mechanism (44) comprises a locking element (54) configured to enable or disable the pedestrian protection mechanism (30).

4. The hinge assembly (16) of claim 3, wherein the locking element (54) is pin-shaped.

5. The hinge assembly (16) of claim 2 and any one of claims 3 and 4, wherein the first part (32) or the second part (40) comprises a guiding means (34), wherein the locking element (54) engages the guiding means (34) such that the locking element (54) may assume a first position (56) relative to the guiding means (34), the first position (56) associated with the enabled state of the pedestrian protection mechanism (30), and such that the locking element (54) may assume a second position (58) relative to the guiding means (34), the second position (58) associated with the disabled state of the pedestrian protection mechanism (30).

6. The hinge assembly (16) of claim 5, wherein the guiding means (34) comprises an obstacle feature (38) to be overcome by the locking element (54) when moving from the first position (56) into the second position (58).

7. The hinge assembly (16) of claim 5 or 6, wherein the guiding means (34) comprises an opening (36) having a cross section formed as two partially merged circular areas.

8. The hinge assembly (16) of claim 2 any one of claims 3 to 7, wherein the second part (40) or the first part (32) comprises an engagement feature (42) engageable by the locking element (54) if the locking mechanism (44) is in the locking state.

9. The hinge assembly (16) of any one of the preceding claims, wherein the locking mechanism (44) comprises a spring assembly (50) configured to lift or open the vehicle front lid (12).

10. The hinge assembly (16) of claim 9 and any one of claims 3 to 8, wherein the spring assembly (50) has a first end (52) connectable to the vehicle body structure (18) and a second end connected to the locking element (54).

11. The hinge assembly (16) of claims 9 or 10, wherein the spring assembly (50) is a gas strut.

12. A method for operating a hinge assembly (16) of any one of claims 1 to 11, the method comprising:
selectively disabling the pedestrian protection mechanism (30).

13. The method of claim 12, wherein the pedestrian protection mechanism (30) is selectively disabled in a crash situation occurring at a speed exceeding a predefined speed threshold.

14. A use of a spring assembly (50) for selectively actuating a locking mechanism (44) for a pedestrian protection mechanism (30) in a vehicle (10), wherein the locking mechanism (44) is configured for selectively locking the pedestrian protection mechanism (30) based on a vehicle speed such that in a locking state (46) of the locking mechanism (44) the pedestrian protection mechanism (30) is disabled and in a release state (48) of the locking mechanism (44) the pedestrian protection mechanism (30) is enabled.

15. A vehicle (10) comprising a hinge assembly (16) of any one of claims 1 to 11.
